# EUROPEAN PATENT APPLICATION

(11) **EP 3 148 033 A1**
(43) Date of publication of application: **29.03.2017**
(21) Application number: 16190584.9
(22) Date of filing: 26.09.2016
(51) Int. Cl.: H02J 1/10, H02M 3/157, H02M 3/28

(54) **DATA REDUCED DIGITAL CURRENT SHARING SYSTEM AND METHOD FOR CURRENT SHARE BUS ENCODING**

(30) Priority: 24.09.2015 DE 102015116189
(71) Applicant: IDT Europe GmbH, 01109 Dresden (DE)
(72) Inventor: Kelly, Antony, Old Kildimo Co. Limerick (IE)
(74) Representative: Lippert Stachow Patentanwälte Rechtsanwälte

(57) **Abstract**

The invention relates to a current share system (1) comprising parallel DC-DC power converters (2), said power converters each comprising a controller (3) and a power stage (4), connected together such that their Vₒᵤₜ connections are coupled via interconnect resistances (5) and said controllers are connected via a current share bus (51) as well as to a method for current share bus encoding in the above mentioned current share system. The objective is to provide a current share system allowing parallel power converters to share current on a common output voltage utilizing such a bus, such that it will be possible to communicate additional information between the controllers without reducing the transfer rate of data. This problem is solved by a current share bus which is a digital bus transmitting digital signals, whereas said digital bus employs a data reduction means to transmit current share information at reduced bus clock frequencies and to be capable of communicating additional information between the controllers for the purpose of a fault management and reconfiguration and the like.

## Description

The invention relates to a current share system comprising parallel DC-DC power converters, said power converters each comprise of a controller and a power stage, connected together such that their Vₒᵤₜ connections are coupled via interconnect resistance and said controllers are connected via a current share bus.

The invention also relates to a method for current share bus encoding in the above mentioned current share system, so using the current share system.

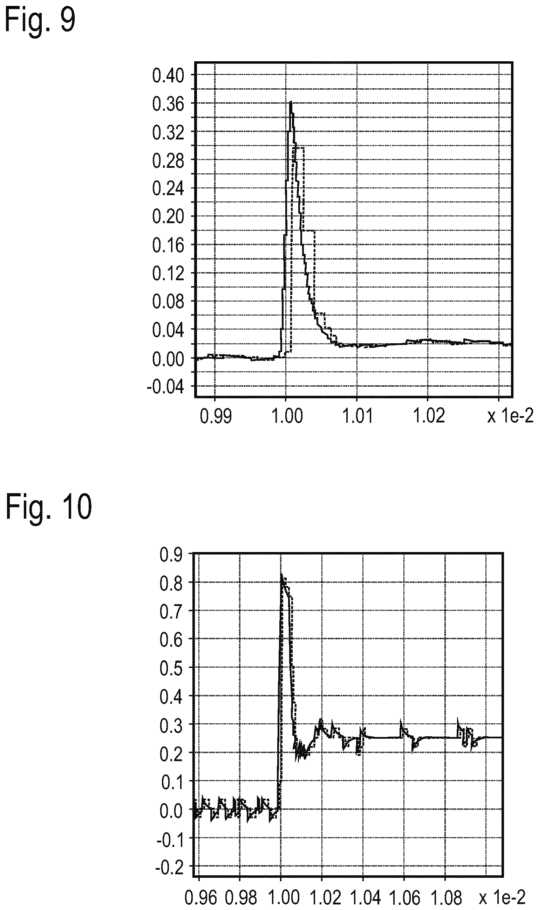

Prior art systems implemented according to active current share principles utilize a common current share bus. Usually this is analogue as described in Capter 12 of "Dynamic Analysis of Switching-Mode DC/DC Converters" by Kislovski, Redl and Sokal (1991). Digital systems also exist, for example see "System Modeling and Digital Control in Modular Masterless Multi-phase DC-DC Converters" by Yang, Zane and Maksimovic, Power Electronics Specialists Conference, 2006. However the digital bus speed can lead to significant delays in balancing the currents (see for example Figure 10 of Yang et.al. 2006).

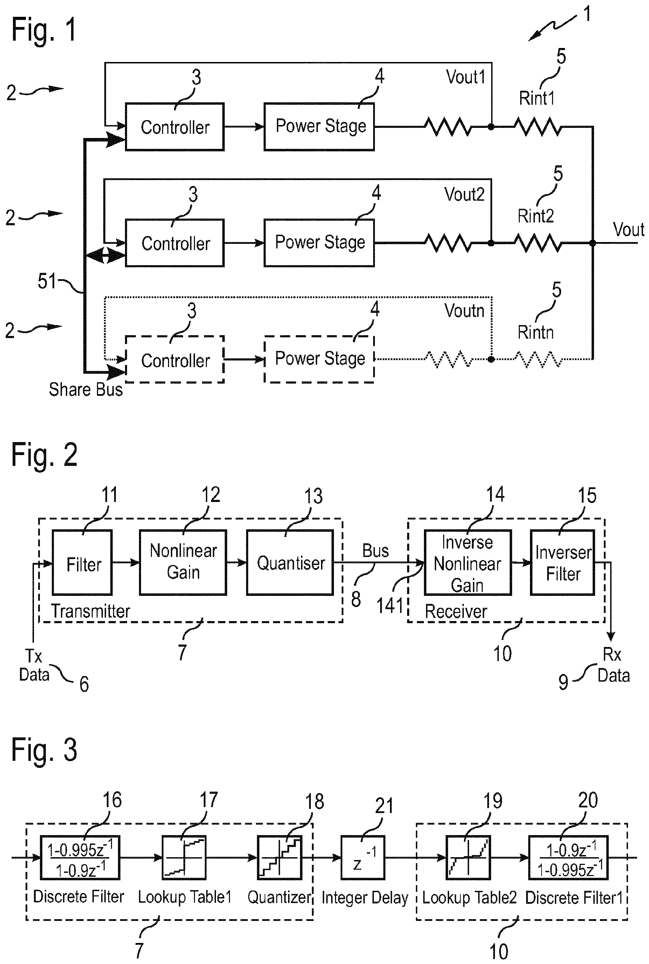

Figure 1 shows several DC-DC converters 2, comprised of a controller 3 and a power stage 4, connected together such that their Vₒᵤₜ connections are coupled via interconnect resistance (Rᵢₙₜ) 5. The controllers 3 are connected via a current share bus 6.

Generally, in DC-DC conversion it is often convenient to parallel power stages with a common output voltage in order to supply high currents to a load. In this way power conversion can be achieved with scalable and modular components. For example, in point of load (POL) module applications multiple POL modules can be employed in parallel to supply the required current to the load.

Traditionally current share is achieved between parallel converters be means of active or passive methods. In active methods a current share bus is employed between controllers. For passive methods a load-line is usually introduced which can be achieved by introducing a resistor to increase the output resistance of the power converter or by imposing a scheme whereby the voltage set-point of the converter changes in proportion to the output current.

Active current share methods are preferred because of losses and/or excessive output voltage deviation incurred in passive methods. Active methods require a current controller in each converter and a current share bus to convey information to all of the parallel converters regarding the required set-point for the current being controlled by each converter's current loop.

For an analogue current share bus it is advantageous that the analogue current share bus can react quickly to changes in converter current error, however it can be sensitive to noise. For a digital current share bus it is advantageous that the digital current share bus can be insensitive to noise, but is limited in the transfer rate of data between controllers which limits the reaction time of the current loop leading to excessive mismatch during transients.

Although conveying information about the currents in the power stages by use of a digital communication bus has limitations regarding reaction time of the current control loop, some further advantages are granted to the system by the communication bus. For example, devices can communicate fault and status information between one another leading to advantages in reconfiguration and fault management.

Therefore what is required is a current share system allowing parallel power converters to share current on a common output voltage utilizing such a bus that it will be possible to communicate additional information between the controllers without reducing the transfer rate of data.

The object of the invention will be solved by a current share bus which is a digital bus transmitting digital signals, whereas said digital bus employs a data reduction means to transmit current share information at reduced bus clock frequencies and to be capable of communicating additional information between the controllers for the purpose of a fault management and reconfiguration and the like. The inventive system may also be named as data reduction system.

Therefore, a suitable data reduction technique makes use of the specific characteristics of a current share signal in order to reduce the number of bits required for transmission, suitably altering the effective resolution of the signal on the current share bus depending on its characteristics so that an overall reduction in transmitted bits is effected versus effective bits received.

Reducing the amount of data to be transmitted across a digital bus for the purposes of current sharing has several advantages, such as increased current share bandwidth, reduced bus clock rate, ability to transmit additional data on the same bus (e.g. control, telemetry and fault data), improved bus characteristics such as board layout and current consumption.

In a preferred embodiment of the invention the data reduction means comprising a transmitter for transmitting a TxData signal, said digital bus and a receiver for receiving an RxData signal. The TxData signal is the signal which is transmitted from the transmitter to the receiver, whereas the RXData signal is the received data in the receiver according to the transmitted signal TxData and the bus connecting the transmitter and the receiver. The function of this system is to receive the TxData as RxData as faithfully as possible whilst ensuring the number of data bits transmitted across the bus is minimized.

Amongst the several types of data that may be transmitted across a digital bus for the purpose of current sharing, the current share reference signal has strict requirements in terms of data rate and resolution. For example, a DC-DC converter operating at a switching frequency of 1MHz may require data transmission at a 1MHz rate (1µs period), transmitting 10 data bits and several protocol bits in that 1µs period, leading to a required bus clock frequency well in excess of 10MHz. As the digital current share bus must extend across a circuit board in an electrically hostile environment, where routing of the bus can be challenging, the signal integrity of such high frequency clocks can be problematic.

The current share reference signal may be derived from the supplied current of a Master DC-DC converter in a Master-Slave scheme in which the master commands the current of the slave or may be a function of the current supplied by all converters in a democratic scheme, and is the reference current supplied to all DC-DC converters.

The primary purpose of current sharing is to balance the thermal stresses amongst the DC-DC converters supplying current onto a voltage rail in a current sharing system. As such, static accuracy of the reference signal is of primary importance. Transient accuracy is of secondary importance.

Therefore, in another embodiment of the invention the transmitter comprises a filter for altering a frequency characteristics of the TxData signal according to a high-pass characteristic, such that transients or dynamic TxData signals are emphasized and static TxData signals are de-emphasized, a nonlinear gain for applying a high gain to static signals resulting from said filter, and a low gain to dynamic signals resulting from said filter and a quantiser for reducing a number of bits to be transmitted to an amount suitable for transmission across a bus.

It is preferred that said nonlinear gain of the transmitter has a high gain in a narrow region around zero. So, the transmitter nonlinear gain is designed to have a high gain in a narrow region around zero such that the effective resolution is increased in this region.

In another embodiment, a DC gain of said filter is designed so that the static signals to be transmitted fall within the high gain region of the nonlinear gain. So the static TxData signals fall within the high gain region of the nonlinear gain.

The quantiser reduces the number of bits to be transmitted to a suitable amount (e.g. 10 bits Txdata reduced to 6 bits). Therefore, the quantiser is arranged after the nonlinear gain.

On the receiver side, it is preferred, that the receiver comprises an inverse-nonlinear gain for applying an inverse of the transmitter nonlinear gain such that the combined gain is linear, and an inverse filter for altering the frequency characteristic of the TxData signal according to a low-pass characteristic that is the inverse of the transmit filter. Overall, the RxData can be seen to consist of quantisation noise which has been filtered and shaped by the receiver and RxData that has been delayed by transmission across the bus. The aim of the invention is to reduce the quantisation noise under static conditions leading to a more faithful reproduction of the RxData (increased resolution), even though the bus signal is highly quantised to reduce the number of bits.

The object of the invention will also be solved by a method comprising the following steps:
Altering an effective resolution of a Txdata signal to be transmitted on the current share bus from a transmitter side to a receiver side depending on its characteristic, whereas on transmitter side
   - the Txdata signal is filtered to alter a frequency characteristics of the TxData signal according to a high-pass characteristic, such that transients or dynamic TxData signals are emphasized and static TxData signals are de-emphasized;
   - a high gain is applied to static TxData signals resulting from the filter, and a low gain is applied to transient signals resulting from the filter; then
   - a number of bits of the TxData signal to be transmitted is reduced to a suitable amount;
      and on receiver side
   - an inverse of the transmitter nonlinear gain is applied such that the combined gain is linear; and
   - the frequency characteristics of the received signal is altered according to a low-pass characteristic that is the inverse of the transmit filter.

As a consequence, it is preferred that a quantization noise under static conditions is reduced.

Considering the tradeoff between the requirements, it may be postulated that a bus encoding method and means may be designed that takes advantage of the differing transient and static accuracy requirements in order to reduce the data transmission requirements on the current share bus.

Therefore, by studying the characteristics of the current share signal, it may deduce that a static signal must be received with high resolution and accuracy but conveys very little information because the signal is not changing; whilst a dynamic signal may be received with less resolution and accuracy but conveys a lot of information because the signal changes a lot.

The invention will be explained in more detail using an exemplary embodiment.

The appended drawings show
- Fig. 1: Typical prior art current sharing system (Vᵢₙ omitted for clarity);
- Fig. 2: Data Reduction System over the bus;
- Fig. 3: An implementation of a Data Reduction System;
- Fig. 4: Magnitude and Phase versus Frequency of the Transmitter Filter;
- Fig. 5: Magnitude and Phase versus Frequency of the Receiver Filter (Inverse Filter);
- Fig. 6: Transfer Function of the Transmitter Nonlinear Gain;
- Fig. 7: Transfer Function of the Receiver Inverse-Nonlinear Gain;
- Fig. 8: Exemplary TxData (dashed line) and RxData (solid line);
- Fig. 9: Output of the Transmit Filter (solid line) and Input of the Receive Filter (dashed line);
- Fig. 10: Output of the Transmitter Nonlinear gain (solid line) and Input of the Receiver Inverse Nonlinear Gain (dashed line).

Consider the system of Figure 2 consisting of data to be transmitted (TxData), a transmitter 7, a bus 8, a receiver 10 and received data (RxData) 9. The function of this system is to receive the TxData 6 as RxData 9 as faithfully as possible whilst ensuring the number of data bits transmitted across the bus is minimized.

In the transmitter 7, the filter 11 alters the frequency characteristics of the TxData signal 6 according to a high-pass characteristic, such that transients are emphasised and static signals are de-emphasised. Next, the Nonlinear gain 12 applies a high gain to the small signals resulting from the filter 11 (static signals), and low gain to the large signals resulting from the filter 11 (dynamic signals). A standard quantiser 13 then reduces the number of bits to be transmitted to a suitable amount (e.g. 10bits TxData reduced to 6bits).

In the receiver 10, the Inverse-Nonlinear gain 14 applies the inverse of the transmitter nonlinear gain 12 such that the combined gain is linear. Next, the inverse-filter 15 alters the frequency characteristics of the signal according to a low-pass characteristic that is the inverse of the transmit filter 11. Overall, the RxData 9 can be seen to consist of quantisation noise which has been filtered and shaped by the receiver 10 and RxData 9 that has been delayed by transmission across the bus 8. The aim of the invention is to reduce the quantisation noise under static conditions leading to a more faithful reproduction of the RxData 9 (increased resolution), even though the bus 8 signal is highly quantised to reduce the number of bits.

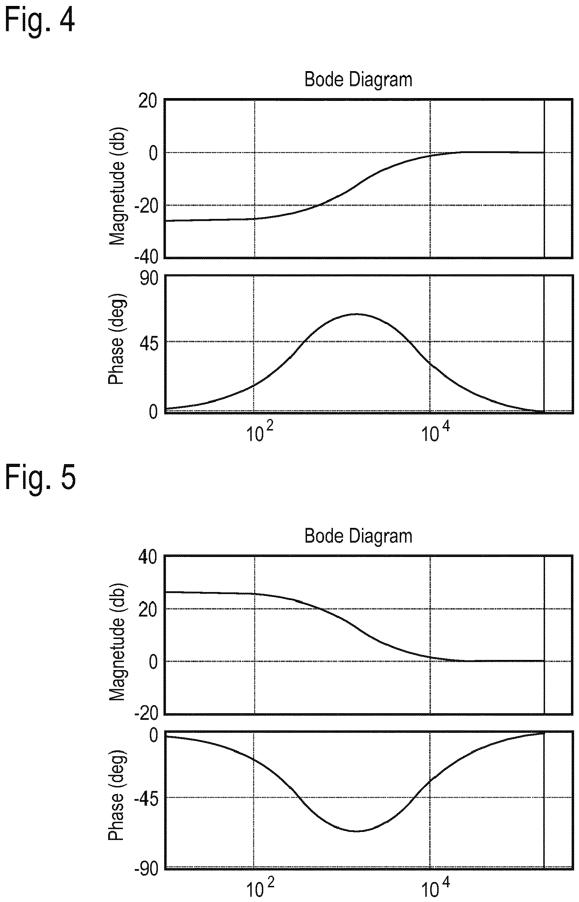

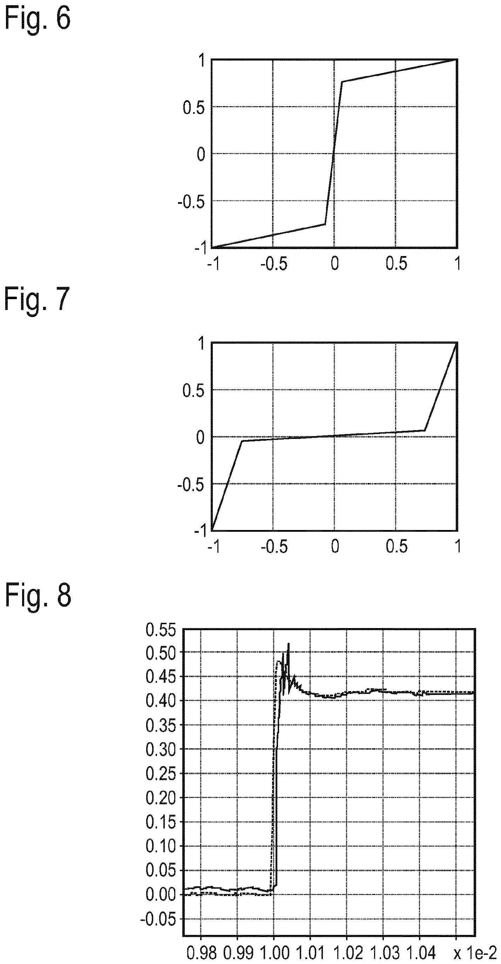

A possible implementation is illustrated in figure 3, where the transmitter 7 is comprised of the discrete filter 16 (figure 4), lookup table1 17 (figure 6), and Quantizer blocks 18, and the receiver 10 is comprised of the lookup table2 19 (figure 7), and discrete filter1 20 (figure 5). The integer delay block 21 represents the delay involved in bus transmission. The quantiser 18 reduces the transmitted signal to 6 bits.

The transmitter 7 nonlinear gain 12 is designed to have a high gain in a narrow region around zero such that the effective resolution is increased in this region. Consider, for example, the transfer function of figure 6, in which the input values between -1/16 and +1/16 are translated into output values of -3/4 to +3/4. The corresponding slope is (3/4)/(1/16) or 12, which corresponds to an increase in resolution according log₂(12) = 3.6 bits. Therefore a 6 bit quantiser 13, following the nonlinear gain 12, would exhibit an effective resolution of 9.6 bits in this region. Input values in the region 1/16 to 1 translate to ¾ to 1 at the output, yielding a resolution reduction in this region of - log₂((1/4)/(15/16)) = 1.9 bits. Therefore a 6 bit quantiser 13, following the nonlinear gain 12, would exhibit an effective resolution of 4.1 bits in this region.

The DC gain of the transmitter filter 11 is designed so that static TxData signals 6 fall within the high gain region of the nonlinear gain 12. For example, the DC gain of the transmitter filter 11 (figure 4), is (1-0.995)/(1-0.9) = 0.05 which lies within the required ±1/16 region.

The blocks in the receiver 10 section of figure 3 perform the inverse of the transmitter functions, as already described.

Operation can be observed in figure 8, figure 9 and figure 10.

Figure 8 shows TxData (dashed line) and RxData (solid line). Clearly the resolution of the RxData under static conditions matches the TxData much more closely than under dynamic conditions. Although the quantiser 13 reduces the transmitted signal 6 to 6 bits, the static resolution of the TxData 6 is measured to be 9.5 bits, whilst the resolution of the dynamic portion of the signal is 4bits. Clearly the system has the effect of altering the effective resolution of the signal on the current share bus depending on its characteristics (i.e. static or dynamic). This shows the invention fulfils the goal of reducing the number of data bits required to encode the current share reference signal on the current share bus whilst preserving static resolution and accuracy.

Figure 9 shows the output of the transmit filter (solid line) and input of the receive filter 15 (dashed line). It is clear that the signals close to zero have a much higher resolution compared to signals close to +/- 1.

Figure 10 shows the Output of the transmitter nonlinear gain 12 (solid line) and input of the receiver inverse nonlinear Gain 141 (dashed line), illustrating the effect of quantisation.

### Reference signs

- 1: current share system
- 2: DC-DC converter
- 3: controller
- 4: power stage
- 5: interconnect resistance
- 51: current share bus
- 6: data to be transmitted, TxData
- 7: transmitter
- 8: bus
- 9: data to be received, RxData
- 10: receiver
- 11: filter
- 12: non-linear gain
- 13: quantiser
- 14: inverse non-linear gain
- 15: inverse filter
- 16: discrete filter
- 17: lookup table1
- 18: quantiser block
- 19: lookup table2
- 20: discrete filter1
- 21: integer delay block
- 141: input of the inverse non-linear gain

## Claims

1. Current share system (1) comprising parallel DC-DC power converters (2), said power converters (2) each comprise of a controller (3) and a power stage (4), connected together such that their Vₒᵤₜ connections are coupled via interconnect resistance (5) and said controllers (3) are connected via a current share bus (51), wherein said current share bus (51) is a digital bus transmitting digital signals, whereas said digital bus employs a data reduction means to transmit current share information at reduced bus clock frequencies and to be capable of communicating additional information between the controllers (3) for the purpose of a fault management and reconfiguration.

2. Current share system (1) according to claim 1, wherein said data reduction means comprising a transmitter (7) for transmitting a TxData signal (6), said digital bus and a receiver (10) for receiving an RxData signal (9).

3. Current share system (1) according to claim 2, wherein said transmitter (7) comprises a filter (11) for altering a frequency characteristics of the TxData signal (6) according to a high-pass characteristic, such that transients or dynamic TxData signals are emphasized and static TxData signals are de-emphasized, a nonlinear gain for applying a high gain to static signals resulting from said filter (11), and a low gain to dynamic signals resulting from said filter (11) and a quantiser (13) for reducing a number of bits to be transmitted to an amount suitable for transmission across the bus.

4. Current share system (1) according to claim 3, wherein said nonlinear gain (12) of the transmitter has a high gain in a narrow region around zero.

5. Current share system (1) according to one of the claims 3 or 4, wherein a DC gain of said filter (11) is designed so that the static signals to be transmitted fall within the high gain region of the nonlinear gain (12).

6. Current share system (1) according to claim 3, wherein said quantiser (13) is arranged after the nonlinear gain (12).

7. Current share system (1) according to claim 2, wherein said receiver (10) comprises an inverse non-linear gain (14) for applying an inverse of the transmitter nonlinear gain such that the combined gain is linear, and an inverse filter (15) for altering the frequency characteristic of the TxData signal (6) according to a low-pass characteristic that is the inverse of the transmit filter.

8. Method for current share bus encoding in a current share system (1) of claim 1 to 7, the method comprising: altering an effective resolution of a Txdata signal (6) to be transmitted on the current share bus (51) from a transmitter side to a receiver side depending on its characteristic, whereas on transmitter side
- the Txdata signal (6) is filtered to alter a frequency characteristics of the TxData signal (6) according to a high-pass characteristic, such that transients or dynamic TxData signals (6) are emphasized and static TxData signals are de-emphasized;
- a high gain is applied to static TxData signals resulting from the filter (11), and a low gain is applied to transient signals resulting from the filter (11); then
- a number of bits of the TxData signal to be transmitted is reduced to a suitable amount;
and on receiver side
- an inverse of the transmitter nonlinear gain is applied such that the combined gain is linear; and
- the frequency characteristics of the received signal (9) is altered according to a low-pass characteristic that is the inverse of the transmit filter.

9. Method for current share bus encoding in a current share system (1) according to claim 8, wherein a quantization noise under static conditions is reduced.
